# EUROPÄISCHE PATENTSCHRIFT

(11) **EP 1 910 722 B1**
(45) Veröffentlichungstag und Bekanntmachung des Hinweises auf die Patenterteilung: **11.02.2009**
(21) Anmeldenummer: 06763770.2
(22) Anmeldetag: 19.06.2006
(51) Int. Cl.: F16K 31/06

(54) **MAGNETISCH BETÄTIGBARES VENTIL**
MAGNETICALLY ACTUABLE VALVE
VANNE A COMMANDE MAGNETIQUE

(30) Priorität: 30.07.2005 DE 102005035878
(43) Veröffentlichungstag der Anmeldung: 16.04.2008
(73) Patentinhaber: Neuhaus, Dietmar, Dr., 40591 Düsseldorf (DE)
(72) Erfinder: Neuhaus, Dietmar, Dr., 40591 Düsseldorf (DE)
(74) Vertreter: Selting, Günther
(86) Internationale Anmeldenummer: PCT/EP2006/063307
(87) Internationale Veröffentlichungsnummer: WO 2007/014796

(56) Entgegenhaltungen:
- EP-A- 1 055 854
- FR-A- 1 298 519
- US-A- 3 828 818
- US-A- 4 880 206
- US-A- 5 653 422

## Beschreibung

Die Erfindung betrifft ein magnetisch betätigbares Ventil, mit einem durch mindestens eine aus magnetisierbarem Material bestehende Wand begrenzten Innenraum, der einen eine Abströmöffnung enthaltenden Ventilsitz aufweist, und mit einer Magnetanordnung, die einen Magnetkreis mit einem in der magnetisierbaren Wand verlaufenden Magnetfluss erzeugt, und mit einem in dem Innenraum bewegbaren Ventilkörper, wobei die magnetisierende Wand mindestens eine das Magnetfeld deformierende Unstetigkeitsstelle aufweist, an der das Magnetfeld in Richtung auf den Ventilkörper aus der Wand austritt.

In DE 199 22 414 C1 (DLR) ist ein Magnetventil beschrieben, bei dem der Ventilkörper allein durch die Druckdifferenz zwischen Ventileingang und Ventilausgang in den Ventilsitz gepresst wird. Das Ventil öffnet, wenn ein seitlich auf den Ventilkörper wirkendes Magnetfeld den Ventilkörper von der Ventilöffnung bewegt. Hierzu ist der Ventilkörper als magnetisierbare Kugel ausgebildet. Die magnetisierbare Wand des Ventilgehäuses enthällt in Höhe des Ventilkörpers eine das Magnetfeld deformierende Unstetigkeitsstelle, an der das Magnetfeld eine parallel zum Ventilsitz gerichtete Kraft auf den Ventilkörper ausübt. Aufgrund der Unstetigkeitsstelle gelangt der magnetische Fluss von der Wand auf den Ventilkörper und von diesem zurück in die Wand. Der magnetische Fluss durch den Ventilkörper ist ein Maß für die Kraft, mit der Ventilkörper von der Ventilöffnung fortbewegt wird. Das Magnetventil schließt, wenn nach dem Abschalten des Magnetfeldes der Ventilkörper allein durch die Strömung auf die Ventilöffnung zurückgetragen wird. Die magnetisierbare Wand bildet mit dem Ventilkörper einen Magnetkreis. Damit bei einer erzeugten magnetischen Spannung ein möglichst großer magnetischer Fluss durch den Ventilkörper gelangt, ist es von Vorteil den magnetischen Widerstand im magnetischen Kreis des Ventils möglichst gering zu halten.

US-A-3,828,818 beschreibt ein Fluidsteuerventil, bei dem ein kugelförmiger Ventilkörper in einem Innenraum angeordnet ist. Die Abströmöffnung ist von einem Ventilsitz umgeben. Eine Spule erzeugt ein Magnetfeld, durch das der Ventilkörper in axialer Richtung von dem Ventilsitz fortbewegt wird, um die Abströmleitung zu öffnen.

In US-A-4,880,206 ist ebenfalls ein magnetisch gesteuertes Fluidventil beschrieben, bei dem der Ventilkörper bei Erregung einer Spule axial zur Strömungsrichtung bewegt wird. Der Ventilsitz befindet sich an der Zuströmöffnung und er ist nicht magnetisierbar.

FR 1298519 B beschreibt ein Fluidventil, bei dem ein Rohr von einer Spule umgeben ist. Das Rohr enthält ein begrenztes Stück aus ferromagnetischem Material auf einer Seite. Bei Erregung der Spule wird eine Ventilkugel von dem Ventilsitz abgezogen und seitlich an das ferromagnetische Stück angezogen. Das Rohr besteht ebenso wie der Ventilsitz aus nicht magnetischem Material.

Der Erfindung liegt die Aufgabe zugrunde, ein magnetisch betätigbares Ventil zu schaffen, das imstande ist eine große Kraft auf den Ventilkörper auszuüben.

Das erfindungsgemäße Ventil weist die Merkmale des Patentanspruchs 1 auf. Hiernach ist der Ventilsitz magnetisierbar und er bildet zusammen mit der Wand den Magnetkreis, wobei das Magnetfeld von der Wand über den Ventilkörper und den Ventilsitz verläuft und den Ventilkörper seitlich von der Abströmöffnung abzieht.

Dadurch, dass der Ventilsitz, der den Boden des Innenraumes bildet, in den Magnetkreis einbezogen ist, verlaufen die magnetischen Feldlinien nur über eine relativ geringe Distanz in Luft. Hierbei ist es insbesondere günstig, wenn der Ventilkörper nahe der Wand angeordnet ist weil dann der Luftspalt sehr klein gehalten werden kann. Auf diese Weise sind die magnetischen Streuverluste gering. Der magnetische Fluss kann somit bei einem geringen magnetischen Widerstand von dem Ventilkörper über den Ventilsitz in die Wand gelangen.

Der Ventilsitz bildet den Ventilboden und somit einen Abschluss des Innenraums. Vorzugsweise steht er in direktem Berührungskontakt mit der Wand, so dass ein zusätzlicher Luftspalt vermieden wird. Der Ventilkörper hat die Aufgabe, die Öffnung des Ventilsitzes zu verschließen.

Der verkleinerte magnetische Widerstand des erfindungsgemäßen Ventils hat bei unveränderter magnetischer Spannung einen höheren magnetischen Fluss zur Folge, wodurch sich die Kraft auf den Ventilkörper erhöht und die maximale Druckdifferenz zwischen Ventileingang und Ventilausgang größer wird, bei der das Ventil noch geöffnet werden kann.

Gemäß einer bevorzugten Ausgestaltung der Erfindung ist vorgesehen, dass die Unstetigkeitsstelle der magnetisierbaren Wand ein Zwischenstück mit gegenüber der Wand verringerter magnetischer Leitfähigkeit aufweist. Ein solches Zwischenstück bewirkt, dass die magnetischen Feldlinien an dieser Stelle aus der Wand austreten, wenn sich ein Körper mit höherem magnetischen Leitwert in der Nähe der Unstetigkeitsstelle befindet. Einen derartigen Körper bildet der Ventilkörper. Die Unstetigkeitsstelle kann aus einer Lücke bestehen, die einen Luftspalt bildet, oder aus einem Festkörpermaterial, vorzugsweise aus amagnetischem Material, wie beispielsweise Kunststoff.

Bei einer ersten Ausführungsform des erfindungsgemäßen Ventils ist der Innenraum rund und der Ventilsitz weist eine außermittig zum Innenraum angeordnete Ventilöffnung auf. Hierbei entsteht die Asymmetrie, die erforderlich ist um den Ventilkörper von der Ventilöffnung zu entfernen, dadurch dass die Ventilöffnung außermittig angeordnet ist.

Bei einer zweiten Ausführungsform weist die magnetisierbare Wand auf entgegengesetzten Seiten Unstetigkeitsstellen unterschiedlicher Längen auf. Auf diese Weise entsteht eine Asymmetrie mit einer verstärkten Anziehungskraft auf den Ventilkörper in einer bevorzugten Richtung.

Das Ventil kann mit einem Ventilkörper oder auch mit mehreren Ventilkörpern ausgestattet sein. Im Falle mehrerer Ventilkörper, die mit demselben Ventilsitz zusammenwirken, ist jeder Ventilkörper außermittig in dem Innenraum angeordnet.

Im Folgenden werden unter Bezugnahme auf die Zeichnungen Ausführungsbeispiele der Erfindungen näher erläutert.

Es zeigen:
- Fig. 1: einen Längsschnitt durch eine erste Ausführungsform des erfindungsgemäßen Ventils,
- Fig. 2: das gleiche Ventil wie Fig. 1 mit eingezeichneten Magnetflusslinien,
- Fig. 3: eine zweite Ausführungsform des Ventils,
- Fig. 4: die gleiche Ausführungsform wie Fig. 3 mit eingezeichneten Magnetflusslinien,
- Fig. 5: eine dritte Ausführungsform des Ventils,
- Fig. 6: die Ausführungsform von Fig. 5 mit eingezeichneten Magnetflusslinien,
- Fig. 7: die Gestaltung des Ventilsitzes mit angeformter Pfanne und einem darin enthaltenen Dichteinsatz,
- Fig. 8: eine weitere Ausführungsform des Ventils mit dem Ventilsitz von Fig. 7
- Fig. 9: das Ventil von Fig. 8 mit eingezeichneten Magnetflusslinien.

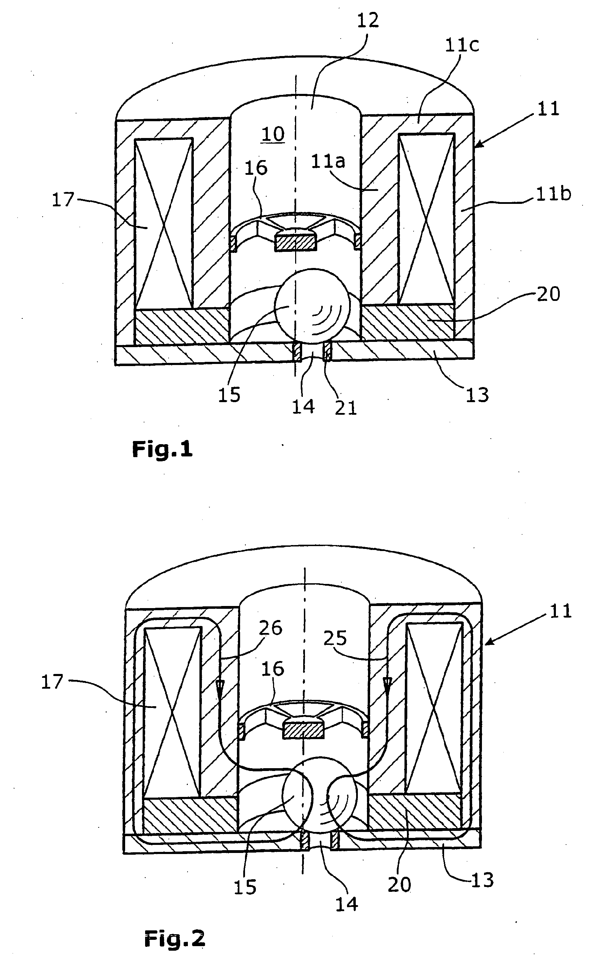

Das Ventil der Fig. 1 und 2 weist einen zylindrischen Innenraum 10 auf, der von einer toroidalen Wand 11 umgeben ist. Der Innenraum 10 weist eine axiale Zuströmöffnung 12 und am entgegengesetzten Ende einen Ventilsitz 13 mit einer die Abströmöffnung bildenden Ventilöffnung 14 auf. In dem Innenraum befindet sich der Ventilkörper 15, der vorzugsweise als Kugel ausgebildet ist und die Ventilöffnung 14 abdichtend verschließen kann. Der Ventilkörper 15 ist in dem Innenraum 10 parallel zum Ventilsitz 13 bewegbar, sowie auch senkrecht zum Ventilsitz. Die Aufwärtsbewegung des Ventilkörpers 15 wird durch eine Fangvorrichtung 16 begrenzt, die in dem Innenraum 10 angeordnet ist.

Die ringförmige Wand 11 enthält in einem ringförmigen Hohlraum eine Magnetanordnung 17 in Form einer Spule aus elektrisch leitendem Draht. Die Magnetanordnung 17 umgibt ringförmig einen Innenschenkel 11a der Wand 11. Sie wird ihrerseits von einem Außenschenkel 11b der Wand 11 umschlossen. Der Innenschenkel 11a und der Außenschenkel 11b sind am oberen Ende durch ein ringförmiges Joch 11c verbunden. Die Wand 11 mit den Schenkeln 11a und 11b und dem Joch 11c bildet einen Körper aus magnetisierbarem Material, insbesondere Eisen oder magnetisierbarem Edelstahl. Der Außenschenkel 11b steht in direktem Flächenkontakt mit dem Ventilsitz 13. Der Ventilsitz 13 ist eine Platte, die den Innenraum 10 nach unten begrenzt und ebenfalls aus magnetisierbarem Material besteht.

Auf dem Ventilsitz 13 ist ein scheibenförmiges Zwischenstück 20 aufliegend befestigt, das aus einem Material von geringerer magnetischer Leitfähigkeit besteht. Die Leitfähigkeit kann auch Null betragen. Während der Außenschenkel 11b der Wand 11 auf dem Ventilsitz 13 aufsteht, endet der Innenschenkel 11a in axialem Abstand von dem Ventilsitz. Dieser Abstand wird durch das ringförmige Zwischenstück 20 ausgefüllt. Die Magnetanordnung 17 ruht auf der Oberseite des Zwischenstücks 20. Das Zwischenstück 20 schließt innen bündig mit dem Innenraum 10 ab. Es befindet sich auf einer Höhe, die der Ventilkörper 15 in der Schließposition des Ventils einnimmt, und hat eine Dicke, die etwa dem Radius des Ventilkörpers 15 entspricht.

Die Ventilöffnung 14 ist außermittig zur Längsachse des Innenraumes 10 in dem Ventilsitz 13 angeordnet, so dass der Ventilkörper 15 sich in der Schließstellung außermittig befindet. Die Ventilöffnung 14 ist von einem Dichteinsatz 21 aus einem elastischen Material, welches als Dichtung wirkt, umgeben. Der Dichteinsatz kann auch ein präzise geschliffener Körper aus Hartstoff (Keramik, Hartmetall) sein. Der Dichteinsatz 21 muss nicht aus magnetisierbarem Werkstoff gefertigt sein.

Fig. 2 zeigt die durch Magnetflusslinien 25 und 26 ergänzte Darstellung von Fig. 1. Man erkennt, dass die Magnetflusslinien von dem Zwischenstück 20 jeweils aus der Wand 11 heraus in den Innenraum 10 verdrängt werden. Der seitlich aus der Wand 11 heraustretende Magnetfluss läuft über den magnetisierbaren Ventilkörper 15 in den Ventilsitz 13 und von dort durch den Außenschenkel 11 b der Wand. Bei der Darstellung gemäß Fig. 2 muss der rechts dargestellte Magnetfluss 25 einen geringeren Luftspalt durchlaufen als der links dargestellte Magnetfluss 26, der durch den breiten Luftspalt zwischen Wand und Ventilkörper geschwächt wird. Folglich zieht der Magnetfluss 25 den Ventilkörper 15 gemäß Figur 2 nach rechts, wodurch die Ventilöffnung 14 geöffnet wird. Der Öffnungsweg des Ventilkörpers ist sehr klein, so dass ein schnelles Öffnen erfolgt. Die Magnetflüsse 25 und 26 werden natürlich nur dann erzeugt wenn die Magnetanordnung 17 durch einen Stromfluss erregt ist. Dies geschieht dann, wenn der Ventilkörper 15 von seinem Sitz fortbewegt werden und die Ventilöffnung freigeben soll.

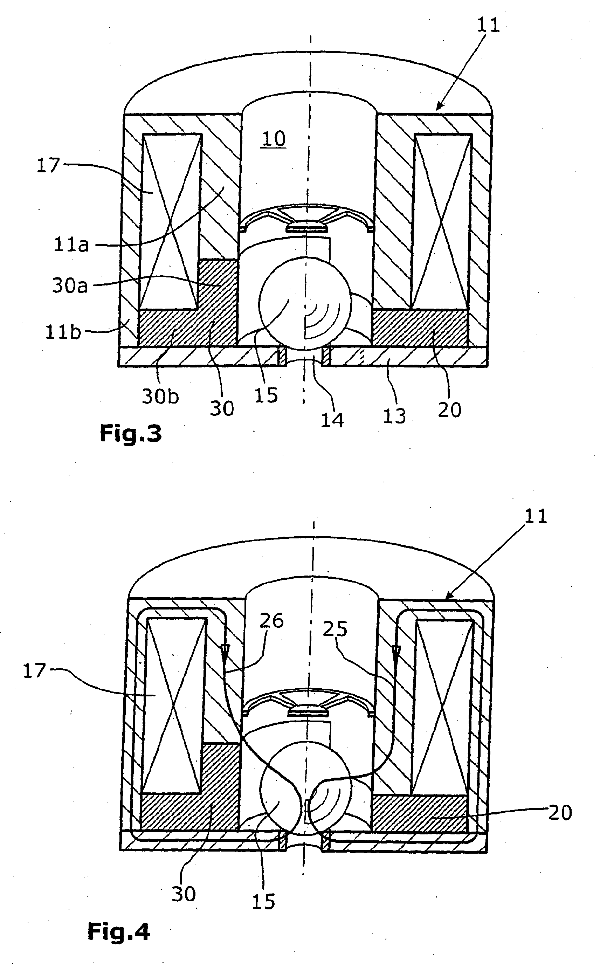

Das Ausführungsbeispiel der Fig. 3 und 4 unterscheidet sich von dem ersten Ausführungsbeispiel nur dadurch, dass die Ventilöffnung 14 zentrisch zum Innenraum 10 angeordnet ist, also auf der Achse des Innenraumes, so dass der Abstand zur Wand 11 in allen Richtungen gleich ist. Zur Erzeugung unterschiedlicher Magnetfeldstärken auf entgegengesetzten Seiten des Ventilkörpers 15 weisen die Unstetigkeitsstellen auf beiden Seiten unterschiedliche Längen auf. Auf einem Teil des Umfangs der Wand 11 ist ein Zwischenstück 20 vorgesehen, das dem Zwischenstück 20 des ersten Ausführungsbeispiels entspricht. In einem anderen Teil des Umfanges ist ein Zwischenstück 30 von größeren axialen Abmessungen als das Zwischenstück 20 vorgesehen. Das Zwischenstück 30 weist einen zylindrischen vertikalen Schenkel 30a auf der sich an den verkürzten Innenschenkel 11a der Wand 11 anschließt, und einen rechtwinklig von dem Schenkel 30a abstehenden Flanschteil 30b, der flächig auf dem Ventilsitz 13 aufliegt und nach außen bis zu dem Schenkel 11b der Wand reicht.

Wie Fig. 4 zeigt, entstehen durch die unterschiedlichen Längen der Unstetigkeitsstellen unterschiedliche Streuungen der Magnetflüsse 25 und 26 in den Innenraum 10 hinein. Der Magnetfluss 25 ist im Bereich des Ventilkörpers 15 konzentrierter als der Magnetfluss 26, der durch das längere amagnetische Zwischenstück 30 stärker gestreut wird. Folglich wird der Ventilkörper 15 gemäß Figur 4 nach rechts bewegt, wenn die Magnetanordnung 17 erregt wird.

Bei diesem Ausführungsbeispiel ist also der Ventilkörper 13 in seiner Schließposition zentrisch angeordnet und es wird ein unsymmetrisches Magnetfeld erzeugt, das den Ventilkörper in einer Richtung parallel zum Ventilsitz 13 antreibt.

Die Höhe des Schenkels 30a entspricht ungefähr dem Durchmesser des kugelförmigen Ventilkörpers 15, kann aber auch deutlich größer sein.

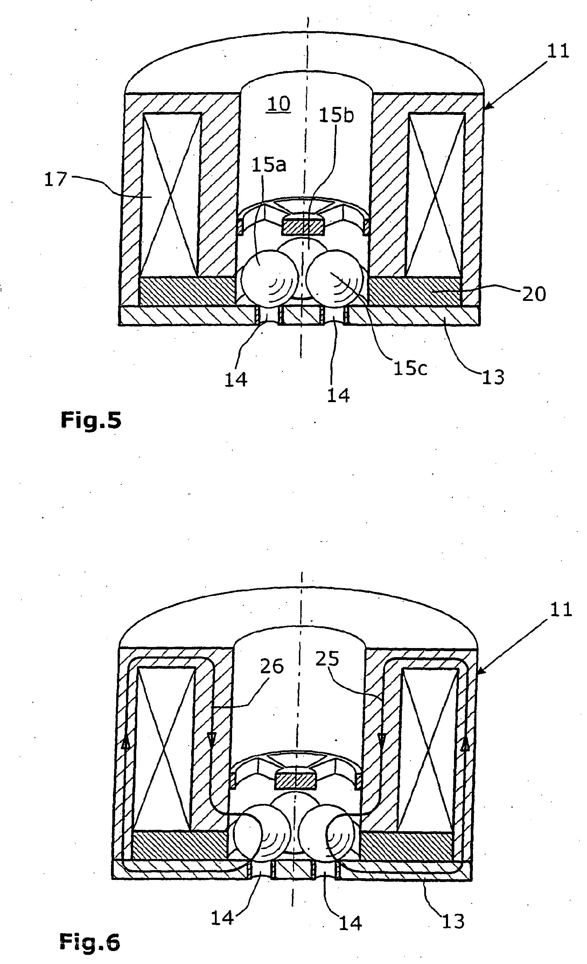

Das Ausführungsbeispiel der Figuren 5 und 6 zeigt mehrere kugelförmige Ventilkörper 15a, 15b, 15c in einem einzigen Ventil. Das Zwischenstück 20 ist hierbei symmetrisch ausgeführt, jedoch ist jeder Ventilkörper in der Schließposition unsymmetrisch im Innenraum 10 angeordnet, d. h. außerhalb der Längsachse des Innenraumes. Dadurch wird jede der Kugeln durch die Magnetkraft zu der Wand 11 gerollt.

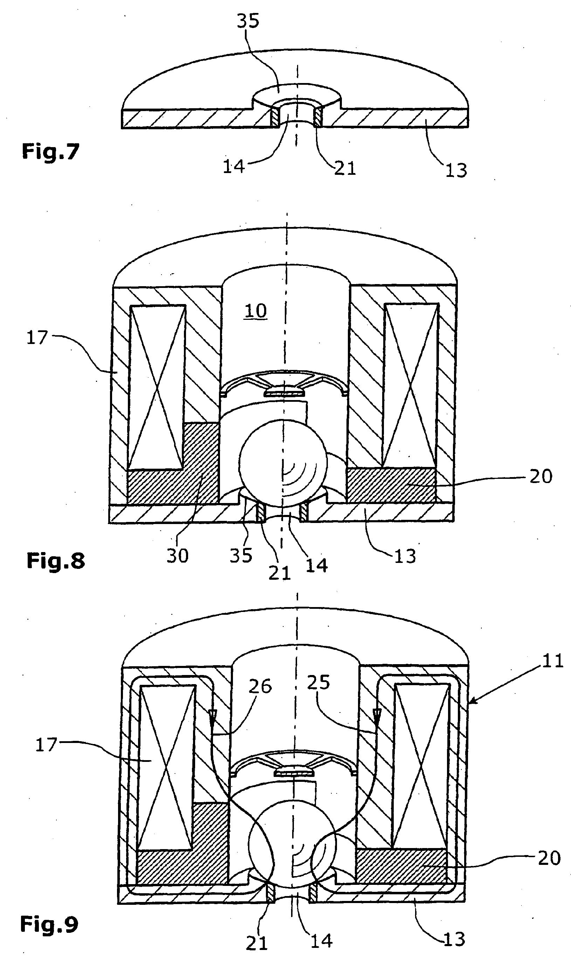

Figur 7 zeigt einen geformten Ventilsitz 13, der einstückig mit einer Pfanne 35 ausgeführt ist, welche die Ventilöffnung 14 umgibt. Die Pfanne 35 bildet einen Trichter um die Ventilöffnung herum. Sie verringert durch ihre Trichterform die mittlere Spaltbreite zwischen dem Ventilkörper und dem Ventilsitz, so dass der magnetische Widerstand zwischen dem Ventilkörper und dem Ventilsitz verringert wird. Auch bei diesem Beispiel ist ein Dichteinsatz 21 vorgesehen.

Die Fig. 8 und 9 zeigen das erfindungsgemäße Magnetventil mit einem geformten Ventilsitz 13 mit angeformter Pfanne 35. Bei diesem Beispiel sind wiederum zwei ungleiche Zwischenstücke 20 und 30 vorgesehen wodurch ein unsymmetrisches Magnetfeld auf den Ventilkörper 15 wirkt, so dass dieser vom Ventilsitz 13 abrollen kann.

## Patentansprüche

1. Magnetisch betätigbares Ventil, mit einem durch mindestens eine aus magnetisierbarem Material bestehende Wand (11) begrenzten Innenraum (10), der einen eine Abströmöffnung (14) enthaltenden Ventilsitz (13) aufweist, und mit einer Magnetanordnung (17), die einen Magnetkreis mit einem in der magnetisierbaren Wand (11) verlaufenden Magnetfluss erzeugt, und mit einem in dem Innenraum (10) bewegbaren Ventilkörper (15), wobei die magnetisierbare Wand (11) mindestens eine das Magnetfeld deformierende Unstetigkeitsstelle aufweist, an der das Magnetfeld in Richtung auf den Ventilkörper (15) aus der Wand (11) austritt,
**dadurch gekennzeichnet, dass**
der Ventilsitz (13) magnetisierbar ist und zusammen mit der Wand (11) den Magnetkreis bildet, wobei der Magnetfluss (25,26) von der Wand (11) über den Ventilkörper (15) und den Ventilsitz (13) verläuft und den Ventilkörper seitlich von der Abströmöffnung (14) abzieht.

2. Ventil nach Anspruch 1 **dadurch gekennzeichnet, dass** die Unstetigkeitsstelle ein in Höhe der Schließposition des Ventilkörpers (15) in der Wand (11) angeordnetes Zwischenstück (20) mit gegenüber der Wand (11) verringerter magnetischer Leitfähigkeit aufweist.

3. Ventil nach Anspruch 2 **dadurch gekennzeichnet, dass** das Zwischenstück (20,30) aus amagnetischem Material besteht.

4. Ventil nach einem der Ansprüche 1 bis 3 **dadurch gekennzeichnet, dass** der Innenraum (10) rund ist und der Ventilsitz (13) eine außermittig zum Innenraum (10) angeordnete Ventilöffnung (14) aufweist.

5. Ventil nach einem der Ansprüche 1 bis 3 **dadurch gekennzeichnet, dass** der Innenraum (10) rund ist und die magnetisierbare Wand (11) auf entgegengesetzten Seiten Unstetigkeitsstellen unterschiedlicher Längen aufweist.

6. Ventil nach einem der Ansprüche 1 bis 5 **dadurch gekennzeichnet, dass** die in dem Ventilsitz (13) vorgesehene Ventilöffnung (14) einen Dichteinsatz (21) aufweist.

7. Ventil nach einem der Ansprüche 1 bis 6 **dadurch gekennzeichnet, dass** die in dem Ventilsitz (13) vorgesehene Ventilöffnung (14) von einer trichterförmigen Pfanne (35) umgeben ist.

8. Ventil nach einem der Ansprüche 1 bis 7 **dadurch gekennzeichnet, dass** mehrere Ventilkörper (15a, 15b, 15c) mit demselben Ventilsitz (13) zusammenwirken, wobei jeder Ventilkörper in der Schließposition außermittig im Innenraum (10) angeordnet ist.

## Claims

1. A magnetically actuatable valve, comprising an interior space (10) delimited by at least one wall (11) made of a magnetizable material, said interior space including a valve seat (13) with an exit opening (14), and comprising a magnet arrangement (17) generating a magnetic circuit with a magnetic flux extending within the magnetizable wall (11), and comprising a valve body (15) arranged to move within said interior space (10), the magnetizable wall (11) including at least one discontinuity site whereby the magnetic field is deformed and where the magnetic field is caused to exit from the wall (11) towards the valve body (15),
**characterized in that**
the valve seat (13) is magnetizable and together with the wall (11) forms the magnetic circuit, the magnetic flux (25,26) proceeding from the wall (11) through the valve body (15) and the valve seat (13) and pulling the valve body laterally away from the exit opening (14).

2. The valve according to claim 1, **characterized in that** said discontinuity site comprises an intermediate piece (20) arranged in the wall (11) at the height of the closing position of the valve body (15) and having a magnetic conductivity lower than that of the wall (11).

3. The valve according to claim 2, **characterized in that** the intermediate piece (20,30) is made of nonmagnetic material.

4. The valve according to any one of claims 1 to 3, **characterized in that** the interior space (10) is round and the valve seat (13) comprises a valve opening (14) arranged eccentrically to the interior space (10).

5. The valve according to any one of claims 1 to 3, **characterized in that** the interior space (10) is round and that the magnetizable wall (11) is on opposite sides thereof provided with discontinuity sites of different lengths.

6. The valve according to any one of claims 1 to 5, **characterized in that** the valve opening (14) provided in the valve seat (13) comprises a sealing insert (21).

7. The valve according to any one of claims 1 to 6, **characterized in that** the valve opening (14) provided in the valve seat (13) is surrounded by a funnel-shaped socket (35).

8. The valve according to any one of claims 1 to 7, **characterized in that** a plurality of valve bodies (15a,15b,15c) are arranged to cooperate with the same valve seat (13), and that each of said valve bodies when in its closed position is arranged eccentrically in the interior space (10).

## Revendications

1. Vanne à commande magnétique comprenant un espace interne (10) délimité par au moins une paroi (11) en matériau magnétisable, ledit espace comprenant un siège de vanne (13) avec une ouverture d'écoulement (14), et comprenant un ensemble d'aimants (17) générant un circuit magnétique avec un flux magnétique s'étendant dans la paroi magnétisable (11), et comprenant un corps de vanne (15) mobile dans l'espace interne (10), la paroi magnétisable (11) comprenant d'au moins une discontinuité déformant le champ magnétique, le champ magnétique sortant de la paroi (11) à ladite discontinuité vers le corps de vanne (15),
**caractérisée en ce que**
le siège de vanne (13) est magnétisable et forme le circuit magnétique avec la paroi (11), le flux magnétique (25, 26) passant par le corps de vanne (15) et le siège de vanne (13) et retirant le corps de vanne latéralement de l'ouverture d'écoulement (14).

2. Vanne selon la revendication 1, **caractérisée en ce que** la discontinuité comprend une partie intermédiaire (20) à conductivité magnétique réduite par rapport à la paroi (11), ménagée dans la paroi (11) au niveau de la position de fermeture du corps de vanne (15).

3. Vanne selon la revendication 2, **caractérisée en ce que** la partie intermédiaire (20, 30) est en un matériau amagnétique.

4. Vanne selon une des revendications 1 à 3, **caractérisée en ce que** l'espace intérieur (10) est circulaire et le siège de vanne (13) comprend une ouverture de vanne (14) excentrique par rapport à l'espace intérieur (10).

5. Vanne selon une des revendications 1 à 3, **caractérisée en ce que** l'espace intérieur (10) est circulaire et la paroi magnétisable (11) comprend des discontinuités de longueurs différentes sur des cotés opposées.

6. Vanne selon une des revendications 1 à 5, **caractérisée en ce que** l'ouverture de vanne (14) prévue dans le siège de vanne (13) comprend un insert d'étanchéité (21).

7. Vanne selon une des revendications 1 à 6, **caractérisée en ce que** l'ouverture de vanne (14) prévue dans le siège de vanne (13) est entourée d'un socle (35) en forme d'une trémie.

8. Vanne selon une des revendications 1 à 7, **caractérisée en ce que** plusieurs corps de vanne (15a, 15b, 15c) coopèrent avec le même siège de vanne (13), chaque corps de vanne étant positionné excentriquement dans l'espace intérieur (10) quand la vanne est en position de fermeture.
